# FASCICULE DE BREVET EUROPEEN

(11) **EP 3 597 863 B1**
(45) Date de publication et mention de la délivrance du brevet: **05.05.2021**
(21) Numéro de dépôt: 19305946.6
(22) Date de dépôt: 17.07.2019
(51) Int. Cl.: F01D 5/28, F01D 9/04, F04D 29/02, F04D 29/64

(54) **AUBE DIRECTRICE DE SORTIE COMPOSITE AVEC FIXATION MÉTALLIQUE POUR TURBOMACHINE**
AUSTRITTSLEITSCHAUFEL AUS VERBUNDMATERIAL MIT METALLHALTERUNG FÜR EINE TURBOMASCHINE
COMPOSITE OUTLET GUIDE VANE WITH METAL ATTACHMENT FOR A TURBOMACHINE

(30) Priorité: 17.07.2018 FR 1856609
(43) Date de publication de la demande: 22.01.2020
(73) Titulaire: SAFRAN AIRCRAFT ENGINES, 75015 Paris (FR)
(72) Inventeur: BOISSON, Alexandre, Bernard, Marie, 77550 MOISSY-CRAMAYEL (FR); LABORIEUX, Larry, Sylvio, 77550 MOISSY-CRAMAYEL (FR); ORIEUX, Kaëlig, Merwen, 77550 MOISSY-CRAMAYEL (FR)
(74) Mandataire: Regimbeau

(56) Documents cités:
- EP-A1- 3 018 363
- EP-A2- 2 412 931
- WO-A1-2014/076408
- US-A1- 2014 169 956

## Description

### DOMAINE DE L'INVENTION

La présente invention concerne une aube directrice de sortie pour turbomachine, notamment une aube comprenant une pale en matériau composite et une partie de fixation métallique.

### ARRIERE-PLAN TECHNOLOGIQUE

Un turboréacteur à double flux comprend généralement, d'amont en aval dans le sens de l'écoulement des gaz, une soufflante carénée et logée dans un carter de soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Un turboréacteur peut être équipé d'une roue de redresseur dans la veine secondaire, une roue de redresseur comprenant des aubes directrices de sortie (ou OGV, acronyme anglais de Outlet Guide Vane). Ces aubes directrices de sortie sont situées dans la partie froide du turboréacteur, en aval des aubes de soufflante par rapport à la direction d'un flux d'air froid dans la turbomachine. Elles visent à la fois à redresser le flux d'air froid en provenance des aubes de soufflante, ainsi qu'à assurer la transmission d'une partie des efforts mécaniques depuis le carter interne vers le carter externe.

Dans le cas d'une roue de redresseur dont les aubes directrices de sortie sont réalisées en matériau composite, chaque aube doit, afin de garantir sa tenue mécanique, être fixée radialement d'une part sur un moyeu d'un carter interne et d'autre part sur une virole de carter intermédiaire d'un carter externe.

Afin d'améliorer le rendement propulsif du turboréacteur et de réduire sa consommation spécifique ainsi que le bruit émis par la soufflante, il a été proposé des turboréacteurs présentant un taux de dilution (« bypass ratio » en anglais, qui correspond au rapport entre le débit du flux secondaire (froid) et le débit du flux primaire (chaud, qui traverse le corps primaire)) élevé.

Les dimensions de la soufflante augmentent globalement avec la quantité de flux secondaire aspiré, donc avec le taux de dilution du turboréacteur qu'elle équipe. Un turboréacteur présentant un taux de dilution élevé conduira ainsi à un diamètre de soufflante, donc de turboréacteur, élevé. Les contraintes de transport d'un turboréacteur à taux de dilution élevé peuvent imposer un montage modulaire d'un module de soufflante, comprenant notamment la soufflante, la roue de redresseur, le moyeu, la virole de carter intermédiaire, le carter interne et le carter externe, sur un module de propulseur. Le montage est alors réalisé par les aubes directrices de sortie de la roue de redresseur.

Cependant, la mise en position liée au montage modulaire n'est pas compatible avec le type de fixation d'une aube directrice de sortie en matériau composite au moyeu du carter interne et à la virole de carter intermédiaire du carter externe. En effet, pour réaliser cette mise en position, l'aube directrice de sortie a besoin d'un dispositif de centrage (portée conique, butée axiale, ou autre). Or, de tels dispositifs de centrage sont coûteux à mettre en œuvre, et ne présentent pas des caractéristiques mécaniques satisfaisantes.

Par ailleurs, l'écoulement de flux secondaire doit être le moins perturbé possible par la fixation de l'aube au moyeu du carter interne. Pour limiter ces perturbations, il est possible de réaliser des plateformes à rapporter sur chaque aube. Ainsi, lorsque les aubes directrices de sortie sont montées entre un moyeu intérieur et une virole de carter intermédiaire extérieure pour former une roue de redresseur, les plateformes reconstituent une veine secondaire afin d'assurer une bonne qualité de l'écoulement.

Un exemple d'aubes directrices de sortie comportant des plateformes en matériau composite est décrit dans le document WO 2014/076408. Néanmoins, de telles aubes réalisées entièrement en matériau composite engendrent des difficultés de fabrication et d'industrialisation, ainsi qu'une tenue mécanique difficile à maîtriser. Un exemple d'aubes directrices de sortie comportant des plateformes métalliques est décrit dans le document EP 2 412 931. Néanmoins, ces plateformes nécessitent pour être fixées aux aubes directrices de sortie l'introduction de pièces supplémentaires, ce qui engendre une masse, une complexité au montage et un encombrement accrus.

### RESUME DE L'INVENTION

Un but de l'invention est de proposer une solution présentant des caractéristiques mécaniques et aérodynamiques améliorées par rapport à l'art antérieur pour une aube directrice de sortie dont la pale est réalisée en matériau composite.

Un autre but de l'invention est de proposer une aube directrice de sortie dont la masse est réduite et la fabrication facilitée par rapport à l'art antérieur.

Un autre but de l'invention est de proposer une aube directrice de sortie permettant un montage modulaire d'un module de soufflante sur un module propulseur.

Selon un premier aspect, l'invention concerne une aube directrice de sortie pour une soufflante d'une turbomachine, l'aube directrice de sortie s'étendant selon un axe radial, l'axe radial s'étendant selon une direction perpendiculaire à un axe de symétrie centrale de la soufflante et passant par lui, la soufflante comprenant un moyeu comportant une bride amont et une bride aval, l'aube directrice de sortie comprenant :
- une pale réalisée en matériau composite comprenant un renfort fibreux densifié par une matrice et s'étendant selon l'axe radial, ladite pale présentant une extrémité radiale interne et une extrémité radiale externe,
- une première partie de fixation métallique fixée sur l'extrémité radiale interne de la pale,
- au moins une première plateforme s'étendant transversalement par rapport à la pale à proximité de son extrémité radiale interne,
l'aube directrice de sortie étant caractérisée en ce que ladite première partie de fixation métallique est configurée pour être rapportée et fixée d'une part sur la bride amont et d'autre part sur la bride aval du moyeu, et en ce que la première plateforme est monolithique avec la première partie de fixation métallique ou avec la pale.

Une telle pale réalisée en matériau composite offre une masse plus faible que la même pale qui serait réalisée en métal. La partie pale composite de l'aube directrice de sortie est dissociée de la partie fixation, qui est métallique. Cela permet une tenue mécanique améliorée par rapport à une aube et une fixation qui seraient intégralement réalisées en matériau composite, et une fabrication plus aisée.

L'au moins une plateforme à proximité de l'extrémité radiale interne de la pale permet de reconstituer la veine secondaire et offre ainsi une meilleure qualité d'écoulement, les perturbations dues à la présence de la fixation étant limitées.

Par ailleurs, cette première plateforme est monolithique avec soit la fixation, soit la pale, ce qui a pour effet de limiter le nombre de pièces à concevoir et à assembler, et ainsi de réduire la masse, l'encombrement et la complexité de l'aube directrice de sortie.

Certaines caractéristiques préférées mais non limitatives de l'aube directrice de sortie sont les suivantes, prises individuellement ou en combinaison :
- l'aube directrice de sortie comprend en outre une deuxième plateforme s'étendant transversalement par rapport à la pale à proximité de l'extrémité radiale externe de la pale,
- l'aube directrice de sortie comprend en outre une deuxième partie de fixation fixée sur l'extrémité radiale externe de la pale, ladite deuxième partie étant configurée pour être rapportée et fixée sur un carter, ladite deuxième partie étant métallique ou dans un matériau composite comprenant un renfort fibreux densifié par une matrice,
- la deuxième partie de fixation est métallique et la deuxième plateforme est métallique et monolithique avec la deuxième partie de fixation métallique,
- la deuxième partie de fixation est métallique, et l'aube directrice de sortie comprend en outre un dispositif amortissant disposé entre la deuxième partie de fixation métallique et la pale,
- la deuxième partie de fixation est en matériau composite et est monolithique avec la pale,
- l'aube directrice de sortie comprend en outre un dispositif amortissant disposé entre la première partie de fixation métallique et la pale.

Selon un deuxième aspect, l'invention concerne une roue de redresseur d'une soufflante d'une turbomachine, ladite roue de redresseur comprenant un moyeu et au moins une aube directrice de sortie selon le premier aspect rapportée et fixée sur le moyeu, dans laquelle :
- le moyeu présente une face transversale, une bride amont et une bride aval, la bride amont et la bride aval présentant chacune une face transversale, une face amont et une face aval, et
- la première partie de fixation métallique comprend un premier bord, configuré pour venir en appui contre l'une parmi la face transversale de la bride amont et la face transversale de la bride aval, et un deuxième bord configuré pour venir en appui contre l'une parmi la face amont de la bride aval et la face aval de la bride amont.

La première partie de fixation métallique d'une telle roue de redresseur peut présenter une forme adaptée pour assurer une mise en position de l'aube directrice de sortie, la première partie de fixation métallique présentant :
- un premier bord présentant une inclinaison par rapport à l'axe de symétrie centrale de la soufflante, selon un angle adapté pour correspondre à un angle d'inclinaison de la face transversale de la bride amont du moyeu, et/ou
- un deuxième bord comprenant une saillie de forme et de dimensions adaptées pour être complémentaires de celles d'une rainure formée dans la face amont de la bride aval du moyeu, et/ou
- un troisième bord présentant une forme adaptée pour le plaquer contre des parois intrados et extrados de l'aube directrice de sortie.

Selon un troisième aspect, l'invention concerne une turbomachine comprenant au moins une aube directrice de sortie selon le premier aspect.

### PRÉSENTATION DES FIGURES

D'autres aspects, buts et avantages de la présente invention apparaîtront à la lecture de la description détaillée qui va suivre, donnée à titre d'exemple non limitatif, qui sera illustrée par les figures suivantes :
- La figure 1 est un schéma représentant un module de soufflante et un module de propulseur adaptés pour être montés par l'intermédiaire d'aubes directrices de sortie conformes à un mode de réalisation de l'invention.
- Les figures 2a et 2b sont des schémas représentant une aube directrice de sortie conforme à un mode de réalisation de l'invention.
- Les figures 3a et 3b sont des schémas représentant une aube directrice de sortie conforme à un mode de réalisation de l'invention.
- Les figures 4a à 4d sont des schémas représentant une première partie de fixation métallique conforme à des modes de réalisation de l'invention.
- La figure 5 est un schéma représentant une aube directrice de sortie munie d'un dispositif amortissant conforme à un mode de réalisation de l'invention.

### DESCRIPTION DETAILLEE D'UN MODE DE RÉALISATION

Dans la présente demande, l'amont et l'aval sont définis par rapport au sens 7 d'écoulement normal du gaz dans la soufflante 2 à travers la turbomachine. Par ailleurs, on appelle axe longitudinal, l'axe X de symétrie centrale de la soufflante 2. La direction longitudinale correspond à la direction de l'axe X, et une direction radiale est une direction perpendiculaire à cet axe et passant par lui. Une direction transversale est une direction perpendiculaire à l'axe X et ne passant pas par lui. Sauf précision contraire, les termes interne et externe, respectivement, sont utilisés en référence à une direction radiale de sorte que la partie ou la face interne d'un élément est plus proche de l'axe X que la partie ou la face externe du même élément.

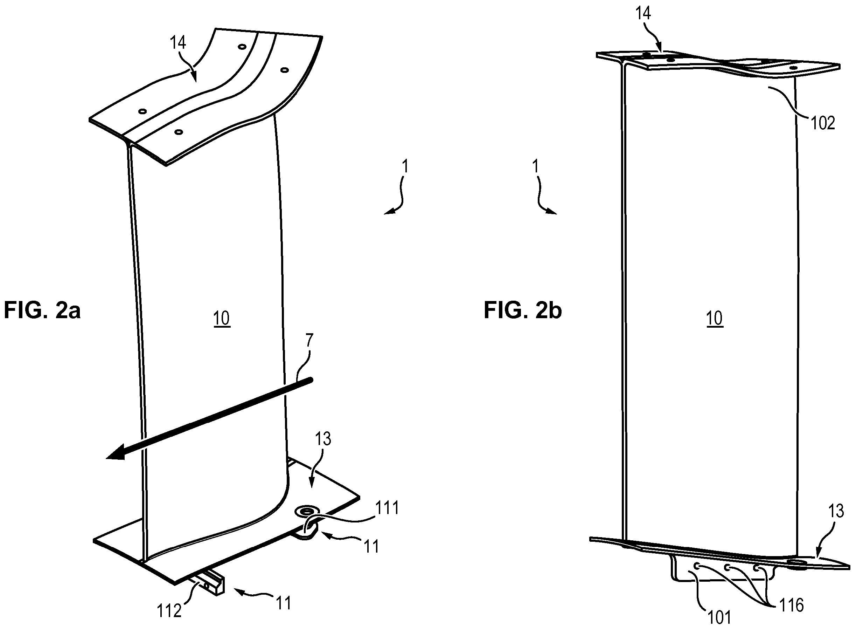

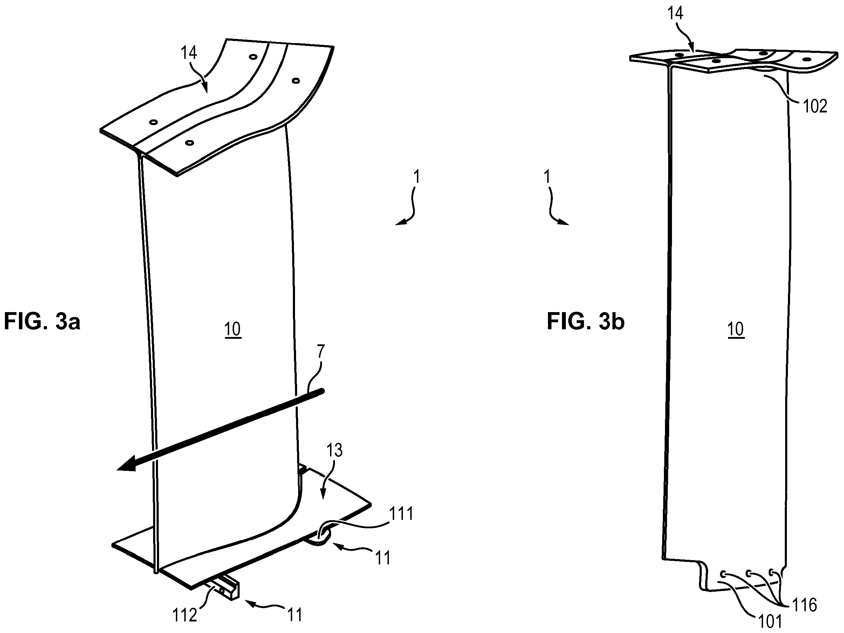

Les figures 2a, 2b, 3a et 3b représentent une aube directrice de sortie 1 pour une roue de redresseur 3 de turbomachine.

La turbomachine comprend un carter interne présentant un moyeu 6 et un carter externe présentant une virole de carter intermédiaire, les carters interne et externe délimitant respectivement à l'intérieur et à l'extérieur une veine d'écoulement gazeux de flux secondaire dans la turbomachine.

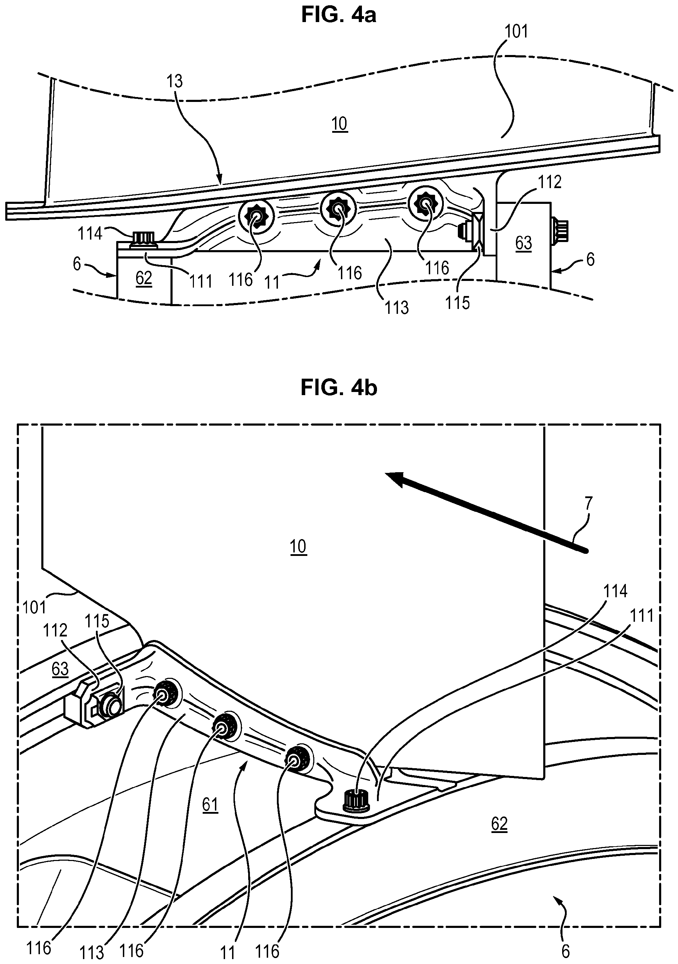

Le moyeu 6 du carter interne, représenté par exemple en figure 4b, peut présenter une face transversale 61, une bride amont 62 et une bride aval 63. La bride amont 62 et la bride aval 63 présentent chacune une face amont configurée pour venir en regard d'un moyeu de la soufflante 2, une face aval opposée à la face amont, et une face transversale connectant la face amont et la face aval.

L'aube directrice de sortie 1 est destinée à être positionnée en aval de la soufflante 2. L'aube directrice de sortie 1 comprend une pale 10. La pale 10 est réalisée en matériau composite comprenant un renfort fibreux densifié par une matrice et s'étendant selon l'axe radial.

Le renfort fibreux peut être formé à partir d'une préforme fibreuse obtenue par tissage tridimensionnel avec épaisseur évolutive. Il peut notamment comprendre des fibres en carbone, en verre, aramide et/ou céramique. La matrice quant à elle est typiquement une matrice polymère, par exemple époxyde, bismaléimide ou polyimide. L'aube 1 est alors formée par moulage au moyen d'un procédé d'injection sous vide de résine du type RTM (pour « Resin Transfer Moulding), ou encore VARRTM (pour Vacuum Resin Transfer Molding).

La pale 10 présente un bord d'attaque et un bord de fuite, raccordés par une paroi intrados et par une paroi extrados. Le bord d'attaque est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados. Les parois intrados et extrados de la pale 10 définissent un profil présentant des dimensions adaptées pour redresser le flux d'air froid en aval des aubes de soufflante 2, ainsi que pour assurer la transmission d'une partie des efforts mécaniques du carter interne vers le carter externe.

La pale 10 comprend une extrémité radiale interne 101 et une extrémité radiale externe 102. L'extrémité radiale externe 102 de la pale 10 peut être fixée à la virole de carter intermédiaire du carter externe.

L'aube directrice de sortie 1 comprend également une première partie de fixation 11 métallique, illustrée à titre d'exemple non limitatif en figures 4a à 4d. La première partie de fixation 11 métallique est fixée sur l'extrémité radiale interne 101 de la pale 10 et est configurée pour fixer la pale 10 sur le moyeu.

Plus précisément, la première partie de fixation 11 métallique est configurée pour être rapportée et fixée d'une part sur la bride amont 62 et d'autre part sur la bride aval 63 du moyeu 6 du carter interne. Elle peut être réalisée dans des matériaux tels que de l'aluminium ou du titane.

La première partie de fixation 11 métallique peut comprendre une partie intrados en contact avec le moyeu 6 et la paroi intrados de la pale 10, et une partie extrados en contact avec le moyeu 6 et la paroi extrados de la pale 10. La partie intrados et la partie extrados de la première partie de fixation 11 métallique peuvent présenter des dimensions (notamment suivant l'axe de symétrie centrale de la soufflante) similaires et s'étendre de part et d'autre de la pale 10. La pale 10 est enserrée entre la partie intrados et la partie extrados de la première partie de fixation 11 métallique. Selon un mode de réalisation préféré, chacune des parties intrados et extrados comporte un premier bord 111, un deuxième bord 112 et un troisième bord 113.

Le premier bord 111 est configuré pour venir en appui contre l'une parmi la face transversale de la bride amont 62 et la face transversale de la bride aval 63 du moyeu 6. Le premier bord 111 s'étend principalement dans les directions transversale et longitudinale de la soufflante.

Le deuxième bord 112 est configuré pour venir en appui contre l'une parmi la face amont de la bride aval 63 et la face aval de la bride amont 62 du moyeu 6. Le deuxième bord 112 s'étend principalement dans les directions transversale et radiale de la soufflante.

Le premier bord 111 et/ou le deuxième bord 112 comprennent chacun un ou plusieurs perçages 114, 115 de manière à être fixés au moyeu 6 par un ou plusieurs moyens de fixation tels que des boulons, des vis, ou tout autre moyen de fixation envisageable.

Le troisième bord 113 de la partie intrados (respectivement extrados) relie le premier bord 111 et le deuxième bord 112 et est configuré pour venir en appui contre la paroi intrados (respectivement extrados) de la pale 10 à proximité ou au niveau de son extrémité radiale interne 101. Le troisième bord 113 s'étend principalement dans les directions radiale et longitudinale de la soufflante. Le troisième bord 113 comprend un ou plusieurs perçages 116 associés à autant d'orifices formés dans la pale 10 de manière à fixer le troisième bord 113 à la pale 10 par l'intermédiaire d'un ou plusieurs moyens de fixation, tels que des boulons. Le ou les orifices sont formés dans la pale 10 selon une direction transversale de sorte que, lorsque la pale est en mise en position, les orifices sont disposés en face des perçages 116 du troisième bord 113. Chaque orifice de la pale est destiné à recevoir une vis. Un écrou du côté de la partie intrados (respectivement extrados) bloque la vis du côté de la paroi intrados (respectivement extrados) de la pale 10.

Dans l'exemple de réalisation illustré, le premier bord 111 est configuré pour venir en appui contre la face transversale de la bride amont 62 du moyeu 6, et est fixé à celle-ci par une vis et un insert. Le deuxième bord 112 est configuré pour venir en appui contre la face amont de la bride aval 63 du moyeu 6, et est fixé à celle-ci par un boulon. Le troisième bord 113 est fixé à la pale 10 par trois boulons.

Les premier et deuxième bords 111, 112 fixent la première partie de fixation 11 métallique au moyeu 6 du carter interne. Le troisième bord 113 fixe la première partie de fixation 11 métallique à la pale 10. Ainsi, la première partie de fixation 11 métallique fixe la pale 10 au moyeu 6 du carter interne.

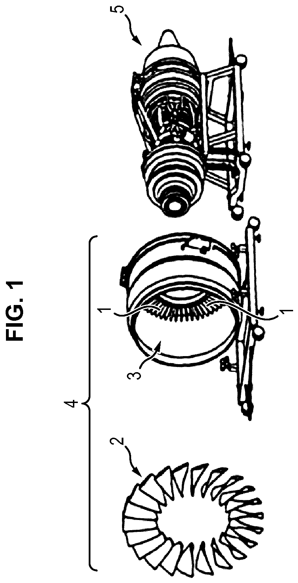

Lorsque les contraintes de transport du turboréacteur imposent un montage modulaire d'un module de soufflante 4 sur un module de propulseur 5, le montage est réalisé par les aubes directrices de sortie 1 du redresseur secondaire 3, comme illustré en figure 1. La première partie de fixation 11 métallique peut alors assurer la mise en position de l'aube directrice de sortie 1 par rapport au moyeu 6.

À cet effet, la face transversale de la bride amont 62 du moyeu 6 ainsi que la premier bord 111 de la première partie de fixation 11 métallique peuvent présenter une légère inclinaison par rapport à l'axe de symétrie centrale de la soufflante, afin d'assurer une mise en position de l'aube directrice de sortie 1 par rapport à la bride amont 62.

Par ailleurs, comme illustré en figure 4b, une rainure peut être formée dans la face amont de la bride aval 63, et une face aval du deuxième bord 112 de la première partie de fixation 11 métallique peut comprendre une saillie, s'étendant dans la direction longitudinale depuis ladite face aval, la rainure et la saillie étant de forme et de dimensions complémentaires afin d'assurer la mise en position de l'aube directrice de sortie 1 par rapport à la bride aval 63.

Enfin, le troisième bord 113 présente une forme permettant de le plaquer contre les parois intrados et extrados de l'aube directrice de sortie 1 afin d'assurer sa mise en position.

Ainsi, la mise en position du module de soufflante 4 sur le module propulseur 5 par l'amont de l'aube directrice de sortie 1 est facilitée.

L'aube directrice de sortie 1 comprend également une première plateforme 13 s'étendant transversalement par rapport à la pale 10 à proximité de son extrémité radiale interne 101.

De préférence, la première plateforme 13 est constituée de deux demi-plateformes. La demi-plateforme intrados (respectivement extrados) s'étend du côté de la paroi intrados (respectivement extrados) de la pale 10. Les deux demi-plateformes peuvent présenter des dimensions similaires, et s'étendre de part et d'autre de la pale 10.

De préférence, la dimension de chaque demi-plateforme selon la direction longitudinale est sensiblement égale à celle de la pale 10. La dimension de chaque demi-plateforme selon la direction transversale peut être adaptée de sorte à assurer leur jonction lorsque les aubes directrices de sortie 1 sont montées entre un moyeu 6 intérieur et une virole de carter intermédiaire pour former une roue de redresseur 3, les plateformes 13 reconstituant alors une paroi de veine secondaire. Les éléments constituant la première partie de fixation 11 métallique sont alors masqués, ce qui permet de limiter les perturbations de l'écoulement résultantes, et ce sans introduire de pièces supplémentaires.

En variante, la dimension des demi-plateformes selon la direction longitudinale peut être inférieure ou supérieure à celle de la pale 10, et leur dimension selon la direction transversale peut ne pas conduire à la reconstitution d'une veine secondaire. La première plateforme 13 peut ne présenter qu'une demi-plateforme intrados, qu'une demi-plateforme extrados, ou présenter deux demi-plateformes de dimensions différentes.

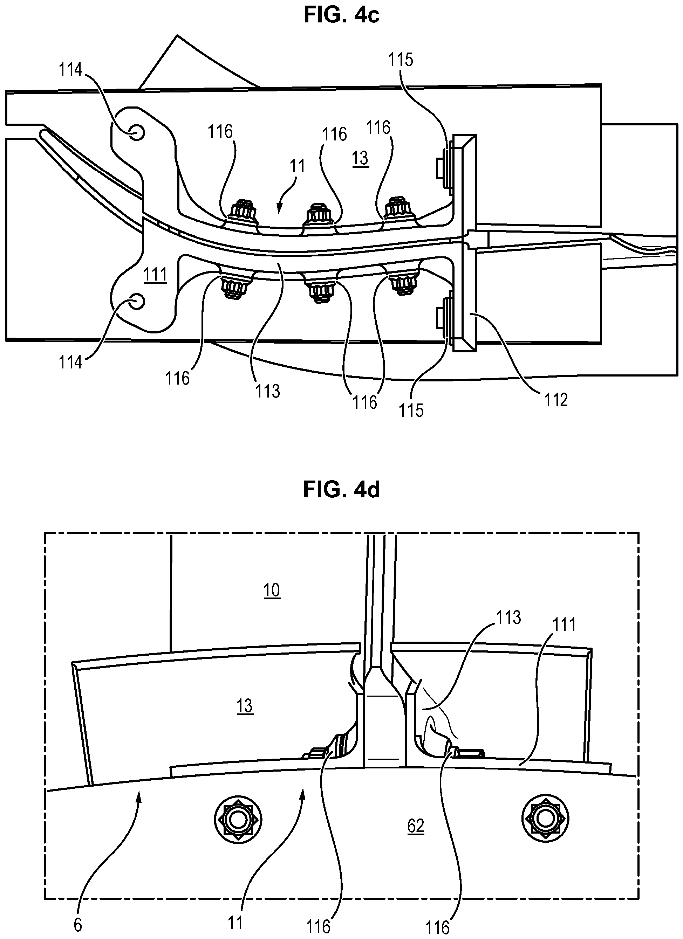

Les figures 3a, 4c et 4d illustrent le cas où la première plateforme 13 et la première partie de fixation 11 métallique sont monolithiques. Par monolithique, on comprendra ici que la première plateforme 13 et la première partie de fixation 11 métallique sont formées intégralement et en une seule pièce, ici en métal. Par exemple, elles peuvent être venues ensemble de fonderie. Dans cet exemple de réalisation, la demi-plateforme intrados (respectivement extrados) s'étend depuis la partie radialement externe du troisième bord 113 de la partie intrados (respectivement extrados) de la première partie de fixation 11 métallique, transversalement par rapport au troisième bord 113.

Les figures 2a, 2b et 4a illustrent le cas où la première plateforme 13 et la pale 10 sont monolithiques. Par monolithique, on comprendra ici que la première plateforme 13 et la pale 10 sont formées intégralement et en une seule pièce. Ainsi, dans cet exemple de réalisation, la première plateforme 13 est, comme la pale 10, réalisée en matériau composite, ce qui offre un gain de masse par rapport à une première plateforme 13 métallique. La première plateforme 13 est située à une position radialement plus externe sur la pale 10 que la première partie de fixation 11 métallique. Elle peut être en contact avec la première partie de fixation 11 métallique. La position de la première plateforme 13 peut être choisie de sorte à optimiser la qualité de l'écoulement, la masse de l'aube directrice de sortie 1 et/ou sa maintenance.

La première plateforme 13 peut être réalisée en formant une déliaison du renfort fibreux de la pale 10. Des méthodes de tissage de préformes d'aubes pour réaliser des déliaisons sont décrites par exemple dans le document WO 2014/076408. Dans une zone de liaison, toutes les couches de fils de chaîne sont solidarisées les unes avec les autres par des fils de trame, formant ainsi une bande unique. A l'inverse, dans une zone de déliaison, deux bandes sont tissées conjointement mais avec des fils de trame indépendants pour chacune, de sorte qu'un plan de déliaison est ménagé entre elles. La préforme est tissée longitudinalement, puis les zones de déliaison sont repliées transversalement, ce qui permet de former les déliaisons.

L'aube directrice de sortie 1 peut également comprendre une deuxième partie de fixation. La deuxième partie de fixation est fixée sur l'extrémité radiale externe 102 de la pale 10, et est configurée pour être rapportée et fixée sur le carter externe, notamment sur la virole de carter intermédiaire.

La deuxième partie de fixation peut être métallique ou dans un matériau composite comprenant un renfort fibreux densifié par une matrice. Le matériau composite est alors le même que celui de la pale 10.

La deuxième partie de fixation peut comprendre une partie intrados s'étendant du côté de la paroi intrados de la pale 10, et une partie extrados s'étendant du côté de la paroi extrados de la pale 10. La partie intrados et la partie extrados de la deuxième partie de fixation peuvent présenter des dimensions similaires et s'étendre de part et d'autre de la pale 10. La pale 10 est enserrée entre la partie intrados et la partie extrados de la deuxième partie de fixation.

La deuxième partie de fixation peut être métallique. La deuxième partie de fixation métallique peut présenter des matériaux et une architecture similaire à ceux de la première partie de fixation 11 métallique, avec un premier bord et un deuxième bord fixés à la viroles de carter intermédiaire, et un troisième bord fixé à la pale 10.

La deuxième partie de fixation peut être en matériau composite et être monolithique avec la pale 10. La deuxième partie de fixation peut consister en une déliaison de la pale 10, et s'étendre transversalement par rapport à la pale 10 à proximité de son extrémité radiale externe 102. La déliaison peut être par exemple vissée ou boulonnée sur la virole de carter intermédiaire.

L'aube directrice de sortie 1 peut également comprendre une deuxième plateforme 14 s'étendant transversalement par rapport à la pale 10 à proximité de son extrémité radiale externe 102.

De préférence, la deuxième plateforme 14 est constituée de deux demi-plateformes. La demi-plateforme intrados s'étend du côté de la paroi intrados de la pale 10, et la demi-plateforme extrados s'étend du côté de sa paroi extrados. Les demi-plateformes de la deuxième plateforme 14 peuvent présenter des règles de dimensionnement similaires à celles des demi-plateformes de la première plateforme 13.

La deuxième plateforme 14 peut être rapportée sur l'aube directrice de sortie 1 afin d'en simplifier la maintenance, ou peut être monolithique avec la deuxième partie de fixation métallique ou avec la pale 10.

Dans le cas où la deuxième plateforme 14 est métallique et monolithique avec la deuxième partie de fixation métallique, de manière similaire à une première plateforme 13 métallique et monolithique avec la première partie de fixation 11 métallique, la demi-plateforme intrados (respectivement extrados) peut s'étendre depuis le troisième bord de la partie intrados (respectivement extrados) de la deuxième partie de fixation métallique, transversalement par rapport au troisième bord, de sorte à être située en une position radialement plus interne sur la pale 10 que la deuxième partie de fixation.

Les figures 2a et 2b illustrent le cas où la deuxième plateforme 14 et la pale 10 sont monolithiques. La deuxième plateforme 14 est alors réalisée en matériau composite. Elle est située en une position radialement plus interne sur la pale 10 que la deuxième partie de fixation, et peut être en contact avec cette dernière.

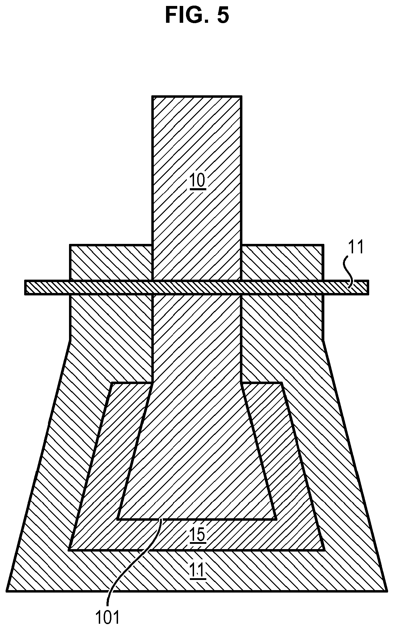

L'aube directrice de sortie 1 peut également comprendre un dispositif amortissant 15, illustré en figure 5, disposé entre la première partie de fixation 11 métallique et/ou la deuxième partie de fixation métallique et la pale 10. Le dispositif amortissant 15 peut se présenter sous la forme d'un ajout de matière qui entoure au moins en partie l'extrémité radiale interne 101 et/ou externe 102 de la pale 10.

Un tel dispositif amortissant 15 permet d'améliorer la durée de vie et la réponse de l'aube directrice de sortie 1 face aux phénomènes notamment de compression et de vibration.

Plusieurs aubes directrices de sortie 1 selon l'un de modes de réalisation décrit ci-dessus peuvent être assemblées de manière à former une roue de redresseur 3.

L'assemblage de l'aube directrice de sortie 1 à la virole de carter intermédiaire et au moyeu 6 s'effectue en fixant la première partie de fixation métallique 11 à l'extrémité radiale interne 101 de la pale 10, et la deuxième partie de fixation, si celle-ci est métallique, à l'extrémité radiale externe 102 de la pale 10.

Puis la première partie de fixation métallique 11 est mise en place sur le moyeu 6 et fixée à ce dernier, et la deuxième partie de fixation est fixée à la virole de carter intermédiaire.

L'ordre d'assemblage des éléments n'est en aucun cas limitatif. Un ordre différent peut être envisagé, par exemple en fixant dans un premier temps les parties de fixation respectivement au moyeu 6 et à la virole, et en y fixant la pale 10 dans un deuxième temps.

D'autres modes de réalisation peuvent être envisagés et une personne du métier peut facilement, modifier les modes ou exemples de réalisation exposés ci-dessus, ou en envisager d'autres, tout en restant dans la portée de l'invention telles que définies dans les revendications annexées. Par exemple, le nombre de plateformes 13, 14 peut varier afin de se conformer à d'éventuelles spécificités locales du carter interne, ou pour faciliter certains aspects du montage ou de la maintenance.

## Revendications

1. Aube directrice de sortie (1) pour un module de soufflante (2) d'une turbomachine, l'aube directrice de sortie (1) s'étendant selon un axe radial, l'axe radial s'étendant selon une direction perpendiculaire à un axe de symétrie centrale du module de soufflante (2) et passant par lui, le module de soufflante (2) comprenant un moyeu (6) comportant une bride amont (62) et une bride aval (63), l'aube directrice de sortie (1) comprenant :
- une pale (10) réalisée en matériau composite comprenant un renfort fibreux densifié par une matrice et s'étendant selon l'axe radial, ladite pale (10) présentant une extrémité radiale interne (101) et une extrémité radiale externe (102),
- une première partie de fixation (11) métallique fixée sur l'extrémité radiale interne (101) de la pale (10),
- au moins une première plateforme (13) s'étendant transversalement par rapport à la pale (10) à proximité de son extrémité radiale interne (101),
l'aube directrice de sortie (1) étant **caractérisée en ce que** ladite première partie de fixation (11) métallique est configurée pour être rapportée et fixée d'une part sur la bride amont (62) et d'autre part sur la bride aval (63) du moyeu (6), et **en ce que** la première plateforme (13) est monolithique avec la première partie de fixation (11) métallique.

2. Aube directrice de sortie (1) selon la revendication 1, comprenant en outre une deuxième plateforme (14) s'étendant transversalement par rapport à la pale (10) à proximité de l'extrémité radiale externe (102) de la pale (10).

3. Aube directrice de sortie (1) selon l'une des revendications 1 ou 2, comprenant en outre une deuxième partie de fixation (12) fixée sur l'extrémité radiale externe (102) de la pale (10), ladite deuxième partie (12) étant configurée pour être rapportée et fixée sur un carter, ladite deuxième partie (12) étant métallique ou dans un matériau composite comprenant un renfort fibreux densifié par une matrice.

4. Aube directrice de sortie (1) selon les revendications 2 et 3 prises en combinaison, dans laquelle la deuxième partie de fixation (12) est métallique et la deuxième plateforme (14) est métallique et monolithique avec la deuxième partie de fixation (12) métallique.

5. Aube directrice de sortie (1) selon l'une des revendications 3 ou 4, dans laquelle la deuxième partie de fixation (12) est métallique, et comprenant en outre un dispositif amortissant (15) disposé entre la deuxième partie de fixation (12) métallique et la pale (10).

6. Aube directrice de sortie (1) selon la revendications 3, dans laquelle la deuxième partie de fixation (12) est en matériau composite et est monolithique avec la pale (10).

7. Aube directrice de sortie (1) selon l'une des revendications 1 à 6, comprenant en outre un dispositif amortissant (15) disposé entre la première partie de fixation (11) métallique et la pale (10).

8. Roue de redresseur (3) d'un module de soufflante (2) d'une turbomachine, ladite roue de redresseur (3) comprenant un moyeu (6) et au moins une aube directrice de sortie (1) selon l'une des revendications 1 à 7 rapportée et fixée sur le moyeu (6), dans laquelle :
- le moyeu (6) présente une face transversale (61), une bride amont (62) et une bride aval (63), la bride amont (62) et la bride aval (63) présentant chacune une face transversale, une face amont et une face aval, et
- la première partie de fixation (11) métallique comprend un premier bord (111), configuré pour venir en appui contre l'une parmi la face transversale de la bride amont (62) et la face transversale de la bride aval (63), et un deuxième bord (112) configuré pour venir en appui contre l'une parmi la face amont de la bride aval (63) et la face aval de la bride amont (62).

9. Roue de redresseur (3) selon la revendication 8, dans laquelle la première partie de fixation (11) métallique présente une forme adaptée pour assurer une mise en position de l'aube directrice de sortie (1), la première partie de fixation (11) métallique présentant :
- un premier bord (111) présentant une inclinaison par rapport à l'axe de symétrie centrale de la soufflante, selon un angle adapté pour correspondre à un angle d'inclinaison de la face transversale de la bride amont (62) du moyeu (6), et/ou
- un deuxième bord (112) comprenant une saillie de forme et de dimensions adaptées pour être complémentaires de celles d'une rainure formée dans la face amont de la bride aval (63) du moyeu (6), et/ou
- un troisième bord (113) présentant une forme adaptée pour le plaquer contre des parois intrados et extrados de l'aube directrice de sortie (1).

10. Turbomachine comprenant au moins une aube directrice de sortie (1) selon l'une des revendications 1 à 7.

## Patentansprüche

1. Austrittsleitschaufel (1) für ein Gebläsemodul (2) einer Turbomaschine, wobei sich die Austrittsleitschaufel (1) gemäß einer radialen Achse erstreckt, wobei sich die radiale Achse gemäß einer Richtung erstreckt, die senkrecht zu einer zentralen Symmetrieachse des Gebläsemoduls (2) ist und durch diese verläuft, wobei das Gebläsemodul (2) eine Nabe (6) umfasst, die einen vorgelagerten Flansch (62) und einen nachgelagerten Flansch (63) aufweist, wobei die Austrittsleitschaufel (1) umfasst:
- ein Blatt (10), das aus Verbundwerkstoff hergestellt ist, umfassend eine durch eine Matrix verdichtete Faserverstärkung, die sich gemäß der radialen Achse erstreckt, wobei das Blatt (10) ein inneres radiales Ende (101) und ein äußeres radiales Ende (102) aufweist,
- einen ersten metallischen Befestigungsteil (11), der auf dem inneren radialen Ende (101) des Blatts (10) befestigt ist,
- mindestens eine erste Plattform (13), die sich in Bezug auf das Blatt (10) in der Nähe seines inneren radialen Endes (101) quer erstreckt,
wobei die Austrittsleitschaufel (1) **dadurch gekennzeichnet ist, dass** der erste metallische Befestigungsteil (11) ausgelegt ist, um zum einen auf dem vorgelagerten Flansch (62) und zum anderen auf dem nachgelagerten Flansch (63) der Nabe (6) angebracht und befestigt zu sein, und dass die erste Plattform (13) mit dem ersten metallischen Befestigungsteil (11) monolithisch ist.

2. Austrittsleitschaufel (1) nach Anspruch 1, umfassend ferner eine zweite Plattform (14), die sich in Bezug auf das Blatt (10) in der Nähe des äußeren radialen Endes (102) des Blatts (10) quer erstreckt.

3. Austrittsleitschaufel (1) nach einem der Ansprüche 1 oder 2, umfassend ferner ein zweites Befestigungsteil (12), das auf dem äußeren radialen Ende (102) des Blatts (10) befestigt ist, wobei der zweite Teil (12) ausgelegt ist, um auf einem Gehäuse angebracht und befestigt zu sein, wobei der zweite Teil (12) metallisch oder aus einem Verbundwerkstoff ist, der eine durch eine Matrix verdichtete Faserverstärkung umfasst.

4. Austrittsleitschaufel (1) nach den in Kombination herangezogen Ansprüchen 2 und 3, wobei der zweite Befestigungsteil (12) metallisch ist und die zweite Plattform (14) metallisch und mit dem zweiten metallischen Befestigungsteil (12) monolithisch ist.

5. Austrittsleitschaufel (1) nach einem der Ansprüche 3 oder 4, wobei der zweite Befestigungsteil (12) metallisch ist und ferner eine Dämpfungsvorrichtung (15) umfasst, die zwischen dem zweiten metallischen Befestigungsteil (12) und dem Blatt (10) angeordnet ist.

6. Austrittsleitschaufel (1) nach Anspruch 3, wobei der zweite Befestigungsteil (12) aus Verbundwerkstoff ist und mit dem Blatt (10) monolithisch ist.

7. Austrittsleitschaufel (1) nach einem der Ansprüche 1 bis 6, umfassend ferner eine Dämpfungsvorrichtung (15), die zwischen dem ersten metallischen Befestigungsteil (11) und dem Blatt (10) angeordnet ist.

8. Nachleitrad (3) eines Gebläsemoduls (2) einer Turbomaschine, wobei das Nachleitrad (3) eine Nabe (6) und mindestens eine Austrittsleitschaufel (1) nach einem der Ansprüche 1 bis 7 umfasst, die auf der Nabe (6) angebracht und befestigt ist, wobei:
- die Nabe (6) eine transversale Fläche (61), einen vorgelagerten Flansch (62) und einen nachgelagerten Flansch (63) aufweist, wobei jeweils der vorgelagerte Flansch (62) und der nachgelagerte Flansch (63) eine transversale Fläche, eine vorgelagerte Fläche und eine nachgelagerte Fläche aufweisen, und
- der erste metallische Befestigungsteil (11) einen ersten Rand (111) umfasst, der ausgelegt ist, um sich auf einer von der transversalen Fläche des vorgelagerten Flanschs (62) und der transversalen Fläche des nachgelagerten Flanschs (63) abzustützen, und einen zweiten Rand (112), der ausgelegt ist, um sich auf einer von der vorgelagerten Fläche des nachgelagerten Flanschs (63) und der nachgelagerten Fläche des vorgelagerten Flanschs (62) abzustützen.

9. Nachleitrad (3) nach Anspruch 8, wobei der erste metallische Befestigungsteil (11) eine Form aufweist, die geeignet ist, eine Positionierung der Austrittsleitschaufel (1) zu sichern, wobei der erste metallische Befestigungsteil (11) aufweist:
- einen ersten Rand (111), der in Bezug auf die zentrale Symmetrieachse des Gebläses eine Neigung gemäß einem Winkel aufweist, der geeignet ist, einem Neigungswinkel der transversalen Fläche des vorgelagerten Flanschs (62) der Nabe (6) zu entsprechen, und/oder
- einen zweiten Rand (112), der einen Vorsprung mit einer Form und Abmessungen umfasst, die geeignet sind, komplementär zu denen einer Rille zu sein, die in der vorgelagerten Fläche des nachgelagerten Flanschs (63) der Nabe (6) ausgebildet ist, und/oder
- einen dritten Rand (113), der eine Form aufweist, die geeignet ist, ihn gegen Unterseiten- und Oberseitenwände der Austrittsleitschaufel (1) zu drücken.

10. Turbomaschine, die mindestens eine Austrittsleitschaufel (1) nach einem der Ansprüche 1 bis 7 umfasst.

## Claims

1. An outlet guide vane (1) for a fan module (2) of a turbomachine, the outlet guide vane (1) extending along a radial axis, the radial axis extending along a direction perpendicular to a central axis of symmetry of the fan module (2) and passing therethrough, the fan module (2) comprising a hub (6) including an upstream flange (62) and a downstream flange (63), the outlet guide vane (1) comprising:
- a blade (10) made of composite material comprising a fiber reinforcement densified by a matrix and extending along the radial axis, said blade (10) having a radial inner end (101) and a radial outer end (102),
- a first metal fastener portion (11) fastened to the radial inner end (101) of the blade (10),
- at least a first platform (13) extending transversely with respect to the blade (10) in the vicinity of its radial inner end (101),
the outlet guide vane (1) being **characterized in that** said first metal fastener portion (11) is configured to be mounted on and fastened, on the one hand, to the upstream flange (62) and, on the other hand, to the downstream flange (63) of the hub (6), and **in that** the first platform (13) is monolithic with the first metal fastener portion (11).

2. The outlet guide vane (1) according to claim 1, further comprising a second platform (14) extending transversely with respect to the blade (10) in the vicinity of the radial outer end (102) of the blade (10).

3. The outlet guide vane (1) according to any of claims 1 or 2, further comprising a second fastener portion (12) fastened to the radial outer end (102) of the blade (10), said second portion (12) being configured to be mounted on and fastened to a casing, said second portion (12) being metallic or made of a composite material comprising a fiber reinforcement densified by a matrix.

4. The outlet guide vane (1) according to claims 2 and 3 taken in combination, wherein the second fastener portion (12) is metallic and the second platform (14) is metallic and monolithic with the second metal fastener portion (12).

5. The outlet guide vane (1) according to any of claims 3 or 4, wherein the second fastener portion (12) is metallic, and further comprising a damping device (15) disposed between the second metal fastener portion (12) and the blade (10).

6. The outlet guide vane (1) according to claim 3, wherein the second fastener portion (12) is made of composite material and is monolithic with the blade (10) .

7. The outlet guide vane (1) according to any of claims 1 to 6, further comprising a damping device (15) disposed between the first metal fastener portion (11) and the blade (10).

8. A rectifier wheel (3) of a turbomachine fan module (2), said rectifier wheel (3) comprising a hub (6) and at least one outlet guide vane (1) according to any of claims 1 to 7 mounted on and fastened to the hub (6), wherein:
- the hub (6) has a transverse face (61), an upstream flange (62) and a downstream flange (63), the upstream flange (62) and the downstream flange (63) each having a transverse face, an upstream face and a downstream face, and
- the first metal fastener portion (11) comprises a first edge (111) configured to bear against one among the transverse face of the upstream flange (62) and the transverse face of the downstream flange (63), and a second edge (112) configured to bear against one among the upstream face of the downstream flange (63) and the downstream face of the upstream flange (62).

9. The rectifier wheel (3) according to claim 8, wherein the first metal fastener portion (11) has a shape adapted to ensure a positioning of the outlet guide vane (1), the first metal fastener portion (11) having:
- a first edge (111) having an inclination with respect to the central axis of symmetry of the fan, at an angle adapted to correspond to an angle of inclination of the transverse face of the upstream flange (62) of the hub (6), and/or
- a second edge (112) comprising a protrusion of shape and dimensions adapted to be complementary to those of a groove formed in the upstream face of the downstream flange (63) of the hub (6), and/or
- a third edge (113) having a shape adapted to press it against intrados and extrados walls of the outlet guide vane (1).

10. A turbomachine comprising at least one outlet guide vane (1) according to any of claims 1 to 7.
